(19) Europäisches Patentamt
European Patent Office
Office européen des brevets

(11) EP 0 773 247 B1

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(51) Int Cl.$^7$: **C08G 18/65**, C08G 18/62

(21) Anmeldenummer: **96117726.8**

(22) Anmeldetag: **06.11.1996**

(54) **Überzugsmittel und Verfahren zur Herstellung von Mehrschichtüberzügen**

Coating composition and process for preparing multi-layer coatings

Composition de revêtement et procédé pour la préparation de revêtements multicouches

(84) Benannte Vertragsstaaten:
**AT BE CH DE DK ES FR GB GR IE IT LI NL PT SE**

(30) Priorität: **11.11.1995 DE 19542119**

(43) Veröffentlichungstag der Anmeldung:
**14.05.1997 Patentblatt 1997/20**

(73) Patentinhaber: **E.I. DU PONT DE NEMOURS AND COMPANY**
**Wilmington Delaware 19898 (US)**

(72) Erfinder:
- **Becker, Heinz-Dietholf**
  **53121 Bonn (DE)**
- **Bremer, Gerhard, Dr.**
  **50226 Frechen (DE)**
- **Stephan, Werner**
  **42111 Wuppertal (DE)**

(74) Vertreter: **Gille Hrabal Struck Neidlein Prop Roos**
**Patentanwälte Brucknerstrasse 20**
**40593 Düsseldorf (DE)**

(56) Entgegenhaltungen:
**EP-A- 0 349 818**
**EP-A- 0 470 461**
**EP-A- 0 588 314**
**DE-A- 4 322 242**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 773 247 B1

## Beschreibung

Die Erfindung betrifft zweikomponentige lösemittelverdünnbare Überzugsmittel auf Basis einer Polyisocyanatkomponente und einer isocyanatreaktiven Komponente. Die Überzugsmitte weisen einen sehr hohen Festkörpergehalt auf und finden Anwendung insbesondere als Füller- oder Grundierungsschichten in der Fahrzeug- und Fahrzeugteilelackierung.

Zweikomponentige Überzugsmittel auf Basis einer Polyhydroxyl- und einer Polyisocyanatkomponente sind seit langem bekannt. Man erhält aus diesen Überzugsmitteln qualitativ hochwertige Überzüge mit sehr guter Chemikalien- und Lösemittelbeständigkeit sowie einem hohen optischen und mechanischen Eigenschaftsniveau.

Im Rahmen allgemeiner ökologischer Forderungen ist man bestrebt, den Lösemittelgehalt bzw. den Anteil flüchtiger organischer Verbindungen (VOC) in derartigen lösemittelhaltigen Überzugsmitteln so gering wie möglich zu halten und einen hohen Festkörpergehalt zu erzielen. Das erreicht man beispielsweise durch den Einsatz sogenannter Reaktivverdünner oder durch Einsatz speziell entwickelter niedrigviskoser Bindemittel.

In der EP-A-0 470 461 werden Bindemittel für zweikomponentige Autoreparaturlacke beschrieben, welche Polyisocyanate und eine isocyanatreaktive Komponente enthalten. Die isocyanatreaktive Komponente basiert auf einer Polyhydroxylverbindung (OH-funktionelle Polyacrylate und/oder Polyester) und einem estergruppenhaltigen sekundären Diamin. Letzteres kann hergestellt werden durch Umsetzung von 3,3'-Dimethyl-4,4'-diamino-dicyclohexylmethan mit Malein- bzw. Fumersäurediethylester (Polyasparaginsäurederivat). In diesen Überzugsmitteln werden Festkörpergehalte von 45 - 65 % erreicht.

In der DE-A-43 16 912 werden zur Herstellung von Füller- und Grundierungsschichten geeignete Bindemittelsysteme genannt, die auf einem Polyisocyanat, einem hydroxyfunktionellen Copolymerisat, erhältlich aus Diestern, alpha,beta-olefinisch ungesättigter Dicarbonsäuren, vinylaromatischen Kohlenwasserstoffen, Alkyl- und Hydroxyalkylestern alpha,beta-olefinisch ungesätttigter Monocarbonsäuren, und einer esterlöslichen Nitrocellulose basieren.

Aus den vorstehend beschriebenen Bindemittelsystemen können Überzugsmittel formuliert werden, die im Vergleich zu herkömmlichen OH/NCO-vernetzenden Systemen einen niedrigen Anteil an flüchtigen organischen Verbindungen und damit einen erhöhten Festkörpergehalt aufweisen. Für spezielle Anwendungen und Einsatzgebiete, insbesondere in der Fahrzeugreparaturlackierung, wo beispielsweise auf Grund der Gesetzgebung extrem niedrige VOC-Werte kleiner 2,1 lbs/gal gefordert werden, sind die genannten Überzugsmittel nicht einsetzbar.

Aufgabe der Erfindung war es daher, lösemittelbasierende isocyanatvernetzende Überzugsmittel, insbesondere zur Herstellung von Grundierungs- und Füllerschichten, bereitzustellen, die im spritzfertigen Zustand einen sehr hohen Festkörpergehalt aufweisen, leicht verspritzbar sind, auch mittels der HVLP-Technik (high volume low pressure) und Überzüge mit einwandfreier Oberflächenqualität und guter Schleifbarkeit ergeben.

Die Aufgabe wird gelöst durch ein Überzugsmittel enthaltend

A) ein oder mehrere hydroxyfunktionelle Copolymerisate, erhältlich durch Umsetzung von

a) 3 - 50 Gew.-% eines oder mehrerer Glycidylester von aliphatischen gesättigten Monocarbonsäuren mit einem tertiären oder quaternären alpha-C-Atom und

b) 97 - 50 Gew.-% von mindestens zwei olefinisch ungesättigten copolymerisierbaren Monomeren, von denen mindestens eines mindestens eine Carboxylgruppe enthält und mindestens eines sterisch gehindert ist, in Gegenwart von radikalischen Polymerisationsinitiatoren,

wobei die Menge an Carboxylgruppen in der Komponente b) die Menge an Glycidylgruppen in der Komponente a) so weit übersteigt, daß das resultierende Copolymerisat eine Säurezah von mindestens 15 mg KOH/g aufweist,

B) ein oder mehrere estergruppenhaltige sekundäre Polyamine der allgemeinen Formel

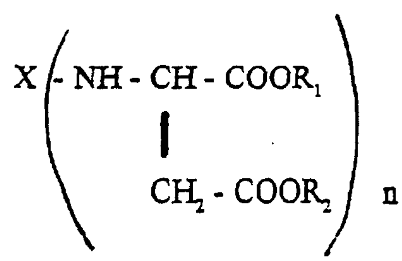 ,

wobei X für einen n-wertigen organischen Rest mit 4 - 20 C-Atomen steht,

R1 und R2 für gleiche oder verschiedene Alkylreste mit 1 - 8 C-Atomen stehen und n für eine ganze Zahl von mindestens 2 steht,

C) ein oder mehrere aliphatische und/oder cycloaliphatische Polyisocyanate mit Allophanatgruppen,

D) Füllstoffe und/oder Pigmente, wobei bezogen auf die gesamte Menge an Füllstoffen und/oder Pigmenten insgesamt 60 - 75 Gew.% an Aluminiumhydroxid ($Al(OH)_3$) und Calcium-Magnesium-Carbonat ($CaMg(CO_3)_2$) enthalten sind, und

E) gegebenenfalls ein oder mehrere organische Lösemittel und lackübliche Additive,

wobei die Polyisocyanatkomponente C) in einem derartigen Mengenanteil vorliegt, daß auf eine Gruppe mit aktivem Wasserstoff 0,5 bis 2 Isocyanatgruppen entfallen.

Bevorzugt liegen die Komponente A) und die Komponente B) in einem Gewichtsverhältnis von 8 : 1 bis 1 : 2, besonders bevorzugt von 6 : 1 bis 1 : 1, bezogen auf Festharz, vor.

In den erfindungsgemäßen Überzugsmittel wird ein sehr hoher Festkörpergehalt, bevorzugt von 80 - 88 Gew.-% erzielt. Unter Festkörpergehalt wird dabei der Einbrennrückstand verstanden, d.h. die Summe der nicht flüchtigen Bestandteile, die nach dem Einbrennen im Überzug verbleiben. Trotz des extrem hohen Festkörpergehaltes lassen sich die Überzugsmittel gut verspritzen, auch mittels der HVLP-Technik, und die Überzüge zeigen eine einwandfreie porenfreie Oberfläche.

Bei der im Anspruch 4 als besondere Ausgestaltung des Erfindung beschriebenen Komponente A handelt es sich um Copolymerisate mit einer Säurezahl von größer als 15, bevorzugt von 18 - 50, besonders bevorzugt von 21 - 35 mg KOH/g, einer OH-Zahl von 40 - 250, bevorzugt von 70-200, besonders bevorzugt von 80 - 180 mg KOH/g und einer Lösungsviskosität von 10 bis 2000, bevorzugt von 15 - 500, besonders bevorzugt von 20 - 150 mPa.s (gemessen an einer 50 %igen Lösung bei 23°C gemäß DIN 53 018). Die Copolymerisate besitzen mittlere Molmassen (Zahlenmittel) von kleiner 5000, bevorzugt von 300 - 4500, besonders bevorzugt von 500 - 4000 g/mol.

Bevorzugt werden 6 - 30 Gew.-% der Komponente a) und 70 - 94 Gew.-% der Komponente b) eingesetzt.

Als Komponente a) werden bevorzugt Glycidylester von alpha-Alkylalkancarbonsäuren und/oder alpha,alpha-Dialkylalkancarbonsäuren einzeln oder im Gemisch verwendet. Besonders bevorzugt handelt es sich dabei um die Glycidylester von C4-C30-Monocarbonsäuren, besonders bevorzugt um die Glycidylester von C5-C20-Monocarbonsäuren.

Beispiele hierfür sind die Glycidylester der 2,2-Dimethylpropionsäure, der 2,2-Dimethylundecansäure und der Neosäuren wie Neohexansäure, Neononansäure, Neodecansäure. Die Alkylreste können hierbei auch eine unterschiedliche Anzahl an C-Atomen besitzen.

Die Komponente b) besteht aus einem Gemisch von

b1) einem oder mehreren olefinisch ungesättigten Monomeren mit mindestens einer Carboxylgruppe und

b2) einem oder mehreren olefinisch ungesättigten sterisch gehinderten Monomeren sowie gegebenenfalls einer oder mehreren der Komponenten b3) bis b5),

b3) einem oder mehreren Hydroxyalkylestern, Hydroxyarylestern oder oligomeren Hydroxyalkylenglykolestern ungesättigter Carbonsäuren,

b4) einem oder mehreren Estern einer ungesättigten Carbonsäure mit. einem einwertigen Alkohol mit 1 bis 20 C-Atomen und

b5) einer oder mehreren olefinisch ungesättigten Verbindungen, die nicht unter b1), b2), b3) oder b4) fallen.

Monomere b1) sind beispielsweise Acrylsäure, Methacrylsäure, Malein-, Fumar- und Itaconsäure sowie deren Halbester, Crotonsäure, Isocrotonsäure und Vinylessigsäure. Bevorzugt sind (Meth)acrylsäure, Maleinsäure und Fumarsäure.

Monomere b2) sind olefinisch ungesättigte sterisch gehinderte Monomere, deren Homopolymerisate Glasübergangstemperaturen von über 45°C aufweisen, gemessen bei einer ausreichend hohen Molmasse, bei der keine Abhängigkeit der Glasübergangstemperatur von der Molmasse mehr besteht. Unter ungesättigten sterisch gehinderten Monomeren sollen Verbindungen mit mindestens einer C-C-Doppelbindung sowie einer verzweigten Kohlenstoffkette und/ oder einer mono- oder polycyclischen Struktur verstanden werden.

Geeignete Monomere b2) sind Ester von olefinisch alpha,betaungesättigten Carbonsäuren, wie der Acrylsäure und der Methacrylsäure, mit sterisch gehinderten Alkoholen sowie sterisch gehinderte Vinylmonomere. Geeignete sterisch gehinderte Alkohole sind beispielsweise gesättigte Alkohole mit 4 - 20 C-Atomen, wie z.B. tert.-Butylalkohol, tert.-Amylalkohol, 2,3-Dimethyl-2-butanol, Neopentylalkohol, 3-Pentanol, sowie cyclische aliphatische Alkohole mit 6 - 20 C-Atomen, wie z.B. Cyclohexanol, 4-tert. -Butylcyclohexanol, 3,3,3-Trimethylcyclohexanol und Isoborneol.

Geeignete sterisch gehinderte Vinylmonomere sind beispielsweise Styrol, 4-Phenylstyrol, Vinylcyclohexan, tert.-Butylstyrol, alpha-Methylstyrol.

Bevorzugte Monomere b2) sind tert.-Butyl-, Cyclohexyl-, 4-tert.-Butylcyclohexyl- und Isobornylester der (Meth)acrylsäure.

Die Hydroxylalkylester b3) sind Ester von ungesättigten Monocarbonsäuren mit aliphatischen Diolen mit bevorzugt 2 - 20 C-Atomen. Beispiele hierfür sind Hydroxyethyl(meth)acrylat, Hydroxypropyl(meth)acrylat, Hydroxybutyl(meth)acrylat, Hydroxyhexyl(meth) acrylat, 2-Hydroxypropyl(meth)acrylat, 2-Hydroxybutyl (meth)acrylat. Ebenso geeignet sind Umsetzungsprodukte aus einem Mol Hydroxyethyl(meth)acrylat und 2 Mol epsilon-Caprolacton.

Ungesättigte Monomere b4) sind beispielsweise Ester ungesättigter Monocarbonsäuren mit aliphatischen einwertigen Alkoholen mit 1 - 20 C-Atomen wie Methyl(meth)acrylat, Ethyl(meth)acrylat, Butyl(meth)acrylat.

Ungesättigte Monomere b5) sind beispielsweise Vinylester, wie Vinylacetat und Silangruppen enthaltende Monomere wie (Meth)acryloxypropyltrimethoxysilan, (Meth)acryloxypropyltris(2-methoxyethoxy)silan.

Für die Herstellung der Copolymerisate A) kommen die üblichen radikalbildenden Polymerisationsinitiatoren einzeln oder im Gemisch in Frage. Beispiele hierfür sind aliphatische Azoverbindungen, Diacylperoxide und bevorzugt Dialkylperoxide.

Die Polymerisation wird vorzugsweise als Substanzpolymerisation durchgeführt.

Geeignete Lösemittel für die so erhaltenen Polymerisate sind z.B. aromatische Kohlenwasserstoffe, wie Xylol, Toluol, Ester, wie Ethylacetat, Butylacetat, Butylpropionat, Glykole, Alkohole, Ketone, wie Methylisobutylketon.

Bei der Komponente B) handelt es sich um Verbindungen der allgemeinen Formel

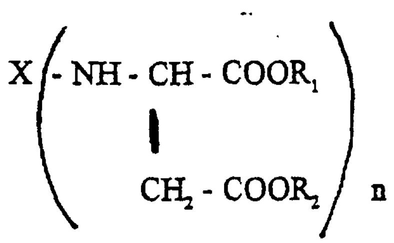

wobei X, $R_1$, $R_2$ und n die vorstehend genannte Bedeutung haben. Besonders bevorzugt sind solche "Polyasparaginsäurederivate", in denen X für einen zweiwertigen Kohlenwasserstoffrest steht, wie er durch Entfernung der Aminogruppen aus 1,4-Diaminobutan, 1,6-Diaminohexan, 2,2,4- und 2,4,4-Trimethyl-1,6-diaminohexan, 1-Amino-3,3,5-trimethyl-5-aminomethylcyclohexan, 4,4'-Diamino-dicyclohexylmethan oder 3,3'-Dimethyl-4,4'-diaminodicyclohexylmethan erhalten wird und in denen n = 2 ist. Bevorzugte Reste R1 und R2 sind Methyl- oder Ethylreste.

Die Herstellung der Komponente B) kann in an sich bekannter Weise durch Umsetzung der entsprechenden primären Polyamine der Formel $X\text{-}(\text{-}NH_2)_n$ mit Malein- oder Fumarsäureestern der allgemeinen Formel $R_1OOC\text{-}CH{=}CH\text{-}COOR_2$ erfolgen. Geeignete Malein- oder Fumarsäureester sind beispielsweise Maleinsäuredimethylester, Maleinsäurediethylester, Maleinsäuredi-n-butylester und die entsprechenden Fumarsäureester. Hierbei ist n bevorzugt 2.

Derartige "Polyasparaginsäurederivate" und ihre Herstellung sind beispielsweise beschrieben in der EP-A-0 470 461.

Es können Gemische verschiedener Komponenten B) vorliegen.

Bei der Polyisocyanatkomponente C) handelt es sich um Allophanatgruppen enthaltende (cyclo)aliphatische Polyisocyanate. Der Begriff (cyclo)aliphatisch soll hier und im folgenden stehen für aliphatisch und/oder cycloaliphatisch.

Bevorzugt enthalten die Polyisocyanate zusätzlich Isocyanuratgruppen. Die Allophanatgruppen enthaltenden Polyisocyanate werden hergestellt, indem ein Teil der Isocyanatgruppen eines (cyclo)aliphatischen Diisocyanates (bevorzugt eines Molekulargewichtsbereiches von 140-400) mit einwertigen Alkoholen mit 1 - 5 C-Atomen im Molekül unter Allophanatbildung umgesetzt werden. Die bevorzugten Allophanatgruppen und Isocyanuratgruppen enthaltenden Polyisocyanate werden hergestellt, indem durch katalytische Trimerisierung eines Teils der Isocyanatgruppen (cyclo)aliphatischer Diisocyanate Isocyanuratgruppen gebildet werden und vor, während und/oder nach der Trimerisierungsreaktion die Umsetzung eines weiteren Teils der Isocyanatgruppen mit einwertigen Alkoholen mit 1 - 5 C-Atomen im Molekül unter Allophanatbildung erfolgt. Allophanat- und Isocyanuratbildung erfolgen bevorzugt bei Reaktionstemperaturen von 50 - 150°C, besonders bevorzugt bei 90 - 120°C.

Geeignete (cyclo)aliphatische Diisocyanate, die als Ausgangskomponenten zur Herstellung der Allophanatgruppen enthaltenden Polyisocyanate eingesetzt werden können, sind organische Diisocyanate der allgemeinen Formel $R(NCO)_2$, wobei R bevorzugt eine (cyclo)aliphatische Kohlenwasserstoffgruppe mit 4 - 15 C-Atomen darstellt. Beispiele für derartige Polyisocyanate sind 1,4-Tetramethylendiisocyanat, 1,6-Hexamethylendiisocyanat, 1,12-Dodecamethyldiisocyanat, 2,2,4-Trimethyl-1,6-Hexamethylendiisocyanat, Cyclohexan-1,3- und 1,4-diisocyanat, Isophorondiisocyanat, Bis-(4-isocyanatocyclohexyl)methan, Bis-(4-isocyanato-3-methylcyclohexyl)methan, 1,3- und 1,4-Bis(isocyanatomethyl)-cyclohexan, 1,3- und 1,4-Tetramethylxylylendiisocyanat. Bevorzugt sind 1,6-Hexamethylendiisocyanat, Isophorondiisocyanat und Bis-(4-isocyanatocyclohexyl)methan. Die Diisocyanate können auch im Gemisch eingesetzt werden.

Beispiele für einzusetzende einwertige Alkohole mit 1 - 5 C-Atomen im Molekül, die gegebenenfalls auch Ethersauerstoffatome enthalten können, sind Methanol, Ethanol, n-Propanol, iso-Propanol, n-Butanol, iso-Butanol, tert.-Butanol, n-Pentanol, 2-Pentanol, 3-Pentanol, die isomeren Methylbutylalkohole, Ethoxymethanol, Methoxymethanol. Bevorzugte Alkohole sind Ethanol, n-Propanol, iso-Propanol und die isomeren Butanole.

Ausführlich beschrieben sind derartige als Komponente C) geeignete Polyisocyanate sowie ihre Herstellung beispielsweise in den EP-A-0 496 208 und EP-A-0 649 866.

Es ist nicht bevorzugt, jedoch auch möglich, daß die Allophanatgruppen enthaltenden Polyisocyanate im Gemisch mit anderen üblichen Lackpolyisocyanaten vorliegen.

Die erfindungsgemäßen Überzugsmittel enthalten Pigmente und/oder Füllstoffe. Dabei ist erfindungswesentlich, daß bezogen auf die gesamte Menge an Pigmenten und/oder Füllstoffen insgesamt 60 - 75 Gew.-% an Aluminiumhydroxid und Calcium-Magnesiumcarbonat im Überzugsmittel enthalten sind. Bevorzugt sollen 65 - 70 Gew.-% an Aluminiumhydroxid und Calcium-Magnesiumcarbonat enthalten sein. Aluminiumhydroxid und Calcium-Magnesiumcarbonat liegen bevorzugt in einem Gewichtsverhältnis von 1 : 3 bis 3 : 1, besonders bevorzugt in einem Gewichtsverhältnis von 1 : 1,5 bis 1,5 : 1 vor.

Bei dem Aluminiumhydroxid kann es sich beispielsweise um im Handel erhältliche pulverförmige Aluminiumhydroxide handeln. Bei dem Calcium-Magnesiumcarbonat kann es sich beispielsweise um im Handel erhältliche pulverförmige natürliche Calciumcarbonate (Dolomit) handeln.

In den erfindungsgemäßen Überzugsmitteln sind zusätzlich ein oder mehrere weitere Pigmente und/oder Füllstoffe enthalten. Als Pigmente sind alle lacküblichen Pigmente organischer oder anorganischer Natur geeignet. Bei den Pigmenten kann es sich um farbgebende Pigmente und/oder um Korrosionsschutzpigmente handeln. Beispiele für anorganische oder organische Farbpigmente sind Titandioxid, mikronisiertes Titandioxid, Eisenoxidpigmente, Ruß, Azopigmente, Phthalocyaninpigment, Chinacridon- oder Pyrrolopyrrolpigmente. Ein Beispiel für Korrosionsschutzpigmente ist Zinkphosphat. Beispiele für weitere Füllstoffe, die zusätzlich zum Aluminiumhydroxid und Calcium-Magnesiumcarbonat im Überzugsmittel enthalten sein können, sind Kieselsäure, Aluminiumsilikat, Magnesiumsilikat, Calciumcarbonat, Bariumsulfat, Kaolin und Talkum.

Das Gewichtsverhältnis Füllstoffe und/oder Pigmente zu Bindemittel (bezogen fest auf fest) beträgt bevorzugt 70 bis 80 zu 30 bis 20.

Die erfindungsgemäßen Überzugsmittel können organische Lösemittel enthalten. Als organische Lösemittel eignen sich beispielsweise: Glykolether, wie Ethylenglykoldimethylether; Propylenglykoldimethylether; Glykoletherester, wie Ethylglykolacetat, Butylglykolacetat, 3-Methoxy-n-butylacetat, Butyldiglykolacetat, Methoxypropylacetat, Ester wie Butylacetat, Isobutylacetat, Amylacetat; Ketone, wie Methylethylketon, Methylisobutylketon, Cyclohexanon, Isophoron, aromatische Kohlenwasserstoffe (z.B. mit einem Siedebereich von 136 - 180°C) und aliphatische Kohlenwasserstoffe.

Die erfindungsgemäßen Überzugsmittel können außerdem lackübliche Additive enthalten. Das sind beispielsweise Verlaufsmittel auf der Basis von (Meth) acryl-Homopolymerisaten oder Silikonöle, Rheologiebeeinflusser, wie pyrogenes Siliziumdioxid, hydriertes Ricinusöl, Härtungsbeschleuniger für die Vernetzungsreaktion mit den Polyisocyanaten und Netzmittel. Die Additive werden in üblichen, dem Fachmann geläufigen Mengen eingesetzt.

Zur Herstellung der erfindungsgemäßen Überzugsmittel werden die Einzelbestandteile miteinander vermischt und in üblicher Weise homogenisiert bzw. vermahlen.

Bei den erfindungsgemäßen Überzugsmitteln handelt es sich um zweikomponentige Überzugsmittel, d.h., die isocyanatreaktiven Komponenten A) und B) und die Polyisocyanatkomponente C) müssen getrennt voneinander gelagert werden.

Kurz vor der Applikation werden die isocyanatreaktiven Komponenten A) und B) und die Komponente D), gegebenenfalls mit Lösemitteln und lacküblichen Additiven mit der Polyisocyanatkomponente C) gründlich vermischt. Danach kann mit organischen Lösemitteln auf Spritzviskosität eingestellt werden.

Die auf diese Weise hergestellten Überzugsmittel sind besonders geeignet zur Herstellung von Füller- und/oder Grundierungsschichten eines lufttrocknenden oder forciert-trocknenden Mehrschichtüberzuges. Sie können jedoch auch bei höheren Temperaturen von z.B. 80 - 140°C gehärtet werden. Sie eignen sich für die Fahrzeug- und Industrielackierung, insbesondere für die Reparaturlackierung von Fahrzeugen und Fahrzeugteilen.

Die Überzugsmittel werden nach bekannten Verfahren, wie z.B. Spritzen, Tauchen, Rollen oder Rakeln, appliziert. Sie können auf ein gegebenenfalls vorbehandeltes Substrat als solches oder auf übliche Grundierungen aufgebracht werden. Sie haften gut auf den verschiedensten Untergründen, wie z.B. blankes Stahlblech, geschliffen, Polyivnylbutyralprimer, 2K-Epoxid-Grundierungen, angeschliffene Werksoder Altlackierungen. Nach dem Trocknen und Schleifen können die erfindungsgemäßen Überzugsmittel problemlos mit üblichen Decklacken überlackiert werden. Dabei kann es sich um Einschichtdecklacke, z.B. auf 2K-Acrylat/Isocyanat-Basis, oder um übliche basecoat/clearcoat-Aufbauten handeln. Es kann mit lösemittelbasierenden oder wasserverdünnbaren Überzugsmitteln überlackiert werden.

Die erfindungsgemäßen Überzugsmittel können beispielsweise bei Raumtemperatur oder nach einer Ablüftzeit von 5 - 15 Minuten 30 - 50 Minuten bei 60°C getrocknet werden.

Die Erfindung betrifft auch Verfahren zur Herstellung von Mehrschichtüberzügen bzw. die Verwendung der Überzugsmittel zur Herstellung von Mehrschichtüberzügen, wobei insbesondere die Füller-und/oder Grundierungsschichten von Mehrschichtüberzügen durch die erfindungsgemäßen Überzugsmittel erstellt werden.

Die erfindungsgemäßen Überzugsmittel weisen einen sehr hohen Festkörpergehalt im spritzfertigen Zustand (80 - 88 Gew.-%) und eine gute Verspritzbarkeit auf. Auch mit der HVLP-Spritztechnik werden porenfreie Oberflächen erzielt. Mit den erfindungsgemäßen Überzugsmitteln werden VOC-Werte von 2,1 Ibs/gal und darunter erreicht. Es werden Überzüge mit ausgezeichnetem Standvermögen, hohem Füllvermögen, guter Schleifbarkeit und geringer Neigung zu Randmarkierungen erzielt. Beim Überlackieren ist ein sehr guter

Lackstand gewährleistet.

Die Erfindung soll an den folgenden Beispielen näher erläutert werden. Alle Angaben beziehen sich auf das Gewicht.

**Beispiel 1**

Herstellung eines Copolymerisates A)

In einem mit Rührwerk, Inertgasleitung, Heiz- und Kühlsystem und Zugabeeinrichtung ausgestatteten Reaktor werden 24,18 Teile eines Glycidylesters einer alpha,alpha-Dialkylalkanmonocarbonsäure (Cardura E 10, Shell Chemicals) (z.T. in Lösemittel) vorgelegt und unter Inertgas auf 170°C aufgeheizt. Dann wird innerhalb 6 Stunden eine Monomerenmischung aus 3,54 Teilen Acrylsäure, 7,69 Teilen Methacrylsäure, 19,85 Teilen Hydroxyethylmethacrylat, 14,89 Teilen Isobornylmethacrylat, 7,18 Teilen Methylmethacrylat und 22,67 Teilen Styrol (z.T. in Lösemittel) zusammen mit 1,5 Teilen eines Initiators (Di-tert.-amylperoxid) gleichmäßig zudosiert. Anschließend wird noch 2 Stunden nachpolymerisiert, bis ein Umsatz von mindestens 95 % erretcht ist. Nach Abdestillation der Restmonomeren wird ein Festkörpergehalt von 98,4 % erreicht. Das Copolymerisat wird dann in Butylacetat angelöst. Es resultiert ein Festkörpergehalt von 70,1 %. Die Säurezahl des Copolymerisates beträgt 22,3 mg KOH/g Festharz, die Hydroxylzahl 134,8 mg KOH/g Festharz und die Viskosität 51 mPa.s (50 %ig in Butylacetat, 23°C).

**Beispiel 2**

Herstellung eines Füllers

Herstellung der Stammkomponente:

In einem gereinigten trockenen Behälter werden 18 Teile einer Copolymerisatlösung entsprechend Beispiel 1, 4,5 Teile eines handelsüblichen Asparaginsäurederivates (Desmophen VP LS 2973, Handelsprodukt der Firma Bayer), 4 Teile eines Lösemittelgemisches aus Butylglykolacetat und Methoxypropylacetat, sowie 0,6 Teile eines handelsüblichen Netzmittels vorgelegt und gründlich vermischt. Anschließend werden unter Rühren 0,3 Teile eines handelsüblichen Thixotropiemittels, 1,9 Teile eines handelsüblichen Verlaufsmittels, 1,5 Teile Eisenoxidpigmente, 5 Teile Titandioxid, 7,2 Teile eines Korrosionsschutzpigmentes, 28 Teile eines handelsüblichen Aluminiumhydroxids (Apyral 15) und 29 Teile eines handelsüblichen Calcium-Magnesium-Carbonates (Microdol 1) zugegeben und mit einer üblichen Dispergiervorrichtung dispergiert.

Herstellung der Härterkomponente

38 Teile Butylacetat, 1,5 Teile einer handelsüblichen Dibutylzinndilaurat-Lösung und 60,5 Teile eines handelsüblichen Allophanatgruppen aufweisenden Polyisocyanates (Desmodur VP LS 2102, Handelsprodukt der Firma Bayer) werden gut miteinander vermischt.

Kurz vor der Applikation werden die Stammkomponente und der Polyisocyanat-Härter im Volumenverhältnis 3 : 1 miteinander vermischt. Dabei wird die Stammkomponente vorgelegt, der Polyisocyanat-Härter zugegeben und gründlich verrührt.

Nach der Härterzugabe ist der Füller spritzfertig eingestellt. Im spritzfertigen Zustand wird ein Festkörpergehalt von 85 Gew.-% erreicht.

**Applikation des Füllers**

Das so erhaltene Überzugsmittel wird durch Spritzauftrag in ein bis zwei Spritzgängen Trockenschichtdicken von 80 - 200 µm auf gereinigte und geschliffene, mit Wash Primer grundierte Stahlbleche aufgebracht und bei Raumtemperatur getrocknet. Es ergeben sich porenfreie Überzüge. Die Überzüge sind nach Trocknung über Nacht bei Raumtemperatur schleifbar. Die Überzüge zeigen hohes Standvermögen und sehr gute Füllkraft.

Nach dem Überlackieren sowohl mit lösemittelbasierendem Basislack und lösemittelbasierendem 2K-Klarlack als auch mit Wasserbasislack und lösemittelbasierendem 2K-Klarlack bzw. nach Überlackieren mit lösemittelbasierendem 2K-Decklack wurden im Salzsprühtest (DIN 53162), im Feucht/Warm-Test (DIN 50017) und im VDA-Test (621-415) Ergebnisse erzielt, die den höchsten Anforderungen an einen Autoreparaturlackaufbau genügen.

**Patentansprüche**

1. Zweikomponentige, lösemittelverdünnbare Überzugsmittel auf Basis einer Polyisocyanatkomonente und einer isocyanatreaktiven Komponente, **dadurch gekennzeichnet, daß** sie enthalten

    A) ein oder mehrere hydroxyfunktionelle Copolymerisate, erhältlich durch Umsetzung von

        a) 3 - 50 Gew.-% eines oder mehrerer Glycidylester von aliphatischen gesättigten Monocarbonsäuren mit einem tertiären oder quaternären alpha-C-Atom und
        b) 97 - 50 Gew.-% von mindestens zwei olefinisch ungesättigten copolymerisierbaren Monomeren, von denen mindestens eines mindestens eine Carboxylgruppe enthält und mindestens eines sterisch gehindert ist, in Gegenwart von radikalischen Polymerisationsinitiatoren,
        wobei die Menge an Carboxylgruppen in der Komponente b) die Menge an Glycidylgruppen in der Komponente a) so weit

übersteigt, daß das resultierende Copolymerisat eine Säurezahl von mindestens 15 mg KOH/g aufweist,

B) ein oder mehrere estergruppenhaltige sekundäre Polyamine der allgemeinen Formel

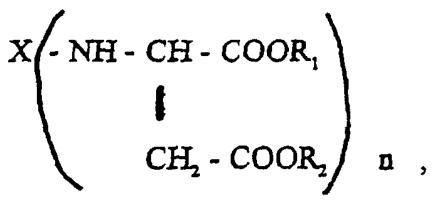

wobei X für einen n-wertigen organischen Rest mit 4 - 20 C-Atomen steht,
R1 und R2 für gleiche oder verschiedene Alkylreste mit 1 - 8 C-Atomen stehen und n für eine ganze Zahl von mindestens 2 steht,

C) ein oder mehrere aliphatische und/oder cycloaliphatische Polyisocyanate mit Allophanatgruppen,

D) Füllstoffe und/oder Pigmente, wobei bezogen auf die gesamte Menge an Füllstoffen und/oder Pigmenten insgesamt 60 - 75 Gew.% an Aluminiumhydroxid ($Al(OH)_3$) und Calcium-Magnesium-Carbonat ($CaMg(CO_3)_2$) enthalten sind, und

E) gegebenenfalls ein oder mehrere organische Lösemittel und lacküblichе Additive,

wobei die Polyisocyanatkomponente C) in einem derartigen Mengenanteil vorliegt, daß auf eine Gruppe mit aktivem Wasserstoff 0,5 bis 2 Isocyanatgruppen entfallen.

2. Überzugsmittel nach Anspruch 1, **dadurch gekennzeichnet, daß** die Komponente A) und die Komponente B) in einem Gewichtsverhältnis von 8 : 1 bis 1 : 2 vorliegen.

3. Überzugsmittel nach Anspruch 1 oder 2, **gekennzeichnet durch** einen Festkörpergehalt von 80 bis 88 Gew.-%.

4. Überzugsmittel nach einem der Ansprüche 1 bis 3, **dadurch gekennzeichnet, daß** das Copolymerisat A) eine zahlenmittlere Molmasse von weniger als 5000 g/mol, eine Säurezahl von mehr als 15 mg KOH/g, eine OH-Zahl von 40 bis 250 mg KOH/g und eine Lösungsviskosität nach DIN 53 018 von 10 bis 2000 aufweist.

5. Überzugsmittel nach einem der Ansprüche 1 bis 4, **dadurch gekennzeichnet, daß** in der allgemeinen Formel der Komponente B) n = 2 ist und R1 und R2 unabhängig voneinander einen Methyl- oder Ethylrest bedeuten.

6. Verfahren zur Herstellung von Mehrschichtüberzügen durch Aufbringen von mindestens zwei Überzugsschichten auf ein Substrat, **dadurch gekennzeichnet, daß** ein Überzugsmittel nach einem der Ansprüche 1 bis 5 zur Herstellung einer Füller- oder Grundierungsschicht verwendet wird.

## Claims

1. Two-component, solvent-dilutable coating compositions based on a polyisocyanate component and an isocyanate-reactive component, **characterised in that** they contain

A) one or more hydroxy-functional copolymers obtainable by reacting

a) 3-50 wt.% of one or more glycidyl esters of aliphatic saturated monocarboxylic acids with a tertiary or quaternary alpha-C atom and

b) 97-50 wt.% of at least two olefinically unsaturated copolymerisable monomers, at least one of which contains at least one carboxyl group and at least one is sterically hindered, in the presence of free-radical polymerisation initiators,

wherein the quantity of carboxyl groups in component b) exceeds the quantity of glycidyl groups in component a) to such an extent that the resultant copolymer exhibits an acid value of at least 15 mg of KOH/g,

B) one or more secondary polyamines containing ester groups and of the general formula

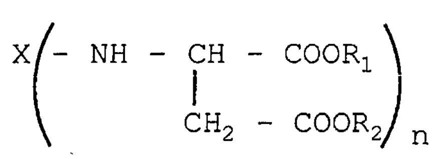

wherein X denotes an n-valent organic residue with 4-20 C atoms
$R_1$ and $R_2$ denote identical or different alkyl residues with 1-8 C atoms and n denotes an integer of at least 2,

C) one or more aliphatic and/or cycloaliphatic polyisocyanates with allophanate groups,

D) extenders and/or pigments, wherein, relative to the entire quantity of extenders and/or pigments, aluminium hydroxide ($Al(OH)_3$) and calcium-magnesium carbonate ($CaMg(CO_3)_2$) constitute a total of 60-75 wt.%, and

E) optionally one or more organic solvents and conventional lacquer additives,

wherein the polyisocyanate component C) is present in a quantity such that there are 0.5-2 isocyanate groups per group comprising active hydrogen.

**2.** Coating composition according to claim 1, **characterised in that** component A) and component B) are present in a ratio by weight of 8:1 to 1:2.

**3.** Coating composition according to claim 1 or 2, **characterised by** a solids content of 80 to 88 wt.%.

**4.** Coating composition according to one of claims 1 to 3, **characterised in that** copolymer A) exhibits a number average molar mass of less than 5000 g/mol, an acid value of greater than 15 mg of KOH/g, an OH value of 40 to 250 mg of KOH/g and a solution viscosity to DIN 53 018 to 10 to 2000.

**5.** Coating composition according to one of claims 1 to 4, **characterised in that** in the general formula for component B), n is equal to 2 and $R_1$ and $R_2$ mutually independently mean a methyl or ethyl residue.

**6.** Process for the production of multilayer coatings by application of at least two coating layers onto a substrate, **characterised in that** a coating composition according to one of claims 1 to 5 is used to produce a surfacer or primer layer.

## Revendications

**1.** Compositions de revêtement à deux composants, aptes à la dilution avec des solvants, à base d'un composant polyisocyanate et d'un composant réactif avec un isocyanate, **caractérisées en ce qu'**elles contiennent

A) un ou plusieurs copolymères à fonction hydroxy, pouvant être obtenus par la réaction de

a) 3-50 % en poids d'un ou plusieurs esters glycidyliques d'acides monocarboxyliques aliphatiques saturés comportant un atome de carbone alpha tertiaire ou quaternaire et
b) 97-50 % en poids d'au moins deux monomères copolymérisables, à insaturation oléfinique, dont au moins un contient au moins un groupe carboxy et au moins un est à empêchement stérique,
en présence d'amorceurs de polymérisation radicalaire,
la quantité des groupes carboxy dans le composant b) excédant la quantité des groupes glycidyle dans le composant a) à un degré tel que le copolymère résultant présente un indice d'acide d'au moins 15 mg de KOH/g,

B) une ou plusieurs polyamines secondaires contenant des groupes ester, de formule générale

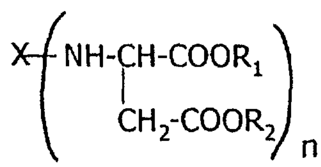

dans laquelle X représente un radical organique n-valent ayant de 4 à 20 atomes de carbone,
$R_1$ et $R_2$ représentent des radicaux alkyle identiques ou différents ayant de 1 à 8 atomes de carbone et n représente un nombre entier égal au moins à 2,
C) un ou plusieurs polyisocyanates aliphatiques et/ou cycloaliphatiques comportant des groupes allophanate,
D) des charges et/ou pigments, au total 60-75 % en poids d'hydroxyde d'aluminium [$Al(OH)_3$] et de carbonate de calcium et de magnésium [$CaMg(CO_3)_2$] étant contenus, par rapport à la quantité totale de charges et/ou de pigments, et
E) éventuellement un ou plusieurs solvants organiques et additifs usuels dans des peintures,

le composant polyisocyanate C) étant présent en une quantité telle que 0,5 à 2 groupes isocyanate correspondent à un groupe à hydrogène actif.

**2.** Composition de revêtement selon la revendication 1, **caractérisée en ce que** le composant A) et le composant B) sont présents en un rapport pondéral de 8:1 à 1:2.

**3.** Composition de revêtement selon la revendication 1 ou 2, **caractérisée par** une teneur en matière solide de 80 à 88 % en poids.

**4.** Composition de revêtement selon l'une quelconque des revendications 1 à 3, **caractérisée en ce que** le copolymère A) présente une masse moléculaire moyenne en nombre de moins de 5 000 g/mole, un indice d'acide de plus de 15 mg de KOH/g, un indice de groupes OH de 40 à 250 mg de KOH/g et une viscosité en solution, selon DIN 53 018, de 10 à 2 000.

**5.** Composition de revêtement selon l'une quelconque des revendications 1 à 4, **caractérisée en ce que**, dans la formule générale du composant B), n = 2 et $R_1$ et $R_2$ représentent, indépendamment l'un de l'autre, un radical méthyle ou éthyle.

**6.** Procédé pour la production de revêtements multicouches par application d'au moins deux couches de revêtement sur un support, **caractérisé en ce qu'**on utilise une composition de revêtement selon l'une quelconque des revendications 1 à 5 pour la production d'une couche d'apprêt ou d'apprêt de garnissage.